Europäisches Patentamt

European Patent Office

Office européen des brevets

(11) Veröffentlichungsnummer: **0 333 883**
**A1**

## EUROPÄISCHE PATENTANMELDUNG
### veröffentlicht nach Art. 158 Abs. 3 EPÜ

(21) Anmeldenummer: 88909008.0

(22) Anmeldetag: 16.09.88

(86) Internationale Anmeldenummer:
PCT/SU88/00181

(87) Internationale Veröffentlichungsnummer:
WO 89/02517 (23.03.89 89/07)

(51) Int. Cl.4: **F02B 53/00**

(30) Priorität: 21.09.87 SU 4306789
21.09.87 SU 4306791

(43) Veröffentlichungstag der Anmeldung:
27.09.89 Patentblatt 89/39

(84) Benannte Vertragsstaaten:
AT BE CH DE FR GB IT LI NL SE

(71) Anmelder: BOGDANOV, Petr Andreevich
Korovinskoe shosse, 15-1-160
Moscow, 127486(SU)

Anmelder: BERDNIKOV, Vladimir Ivanovich
ul. Tallinskaya, 6-3-402
Moscow, 123458(SU)

(72) Erfinder: BOGDANOV, Petr Andreevich
Korovinskoe shosse, 15-1-160
Moscow, 127486(SU)
Erfinder: BERDNIKOV, Vladimir Ivanovich
ul. Tallinskaya, 6-3-402
Moscow, 123458(SU)
Erfinder: MAZUR, Valentin Mitrofanovich
3 Likhachevsky per., 3-3-291
Moscow, 125438(SU)
Erfinder: SCHIPCHIKOV, Viktor Alexandrovich
2 Likhachevsky per., 2-38
Moscow, 125438(SU)

(74) Vertreter: Nix, Frank Arnold, Dr. et al
Kröckelbergstrasse 15
D-6200 Wiesbaden(DE)

(54) **VERBRENNUNGSMOTOR MIT ROTIERENDEM KOLBEN.**

(57) Der Rotationsmotor enthält einen auf Lagerungen (3) in einem Gehäuse (4) angeordneten Rotor (1). Das Gehäuse (4) besitzt eine zylindrische Wand (6) und Stirnwände (7, 8). In den Stirnwänden (7, 8) sind sektorförmige Ausnehmungen ausgeführt, die gemeinsam mit den Stirnflächen (13a, 13b) des Rotors (1) Verdichtungs-, Verbrennungs-und Expansionszonen bilden, welche mit jeweiligen Mitteln (15) zur Zuführung mindestens einer Brenngemischkomponente, mit Entzündungsmitteln (19) sowie mit Abgasauslaßmitteln verbunden sind. Im Rotor (1) sind Radialnuten vorhanden, in denen Plattenkolben untergebracht sind, die die Zonen in Kammern veränderlichen Volumens unterteilen. In den Stirnflächen (13a, 13b) des Rotors (1) sind zwischen den Platten-kolben Aussparungen (23) ausgeführt. Das Entzündungsmittel (19) ist innerhalb einer ringförmigen Zone angeordnet, die zur Umlaufachse ($O_1$ - $O_1$) des Rotors (1) konzentrisch und durch die untere bzw. obere Kante der Aussparungen (23) begrenzt ist. Der Zentralwinkel, in dessen Öffnung sich die Aussparung (23) befindet, ist kleiner als der Zentralwinkel der flachen Abschnitte der Stirnwände (7, 8) des Gehäuses (4).

FIG.1

# ROTATIONS-VERBRENNUNGSMOTOR

### Technisches Gebiet

Die vorliegende Erfindung bezieht sich auf den Kraftmaschinenbau, insbesondere auf einen Rotations-Verbrennungs motor.

### Zugrundeliegender Stand der Technik

Zur Zeit ist angesichts einer recht intensiven Umweltverschmutzung durch mit Kohlenwasserstoff-Kraftstoffen arbeitende Energie-wandler die Notwendigkeit entstanden, Verbren-nungsmotorkonstruktionen weiter zu vervollkom-men, damit eine komplexe Verbesserung von öko-logischen, wirtschaftlichen, technologischen Kenn-ziffern, Energie-Masse-Verhältnissen , Anordnungs-lösungen, Betriebsparametern und anderen Kenn-werten von Verbrennungsmotoren erzielt werden könnte.

Erhebliches Entwicklungsvermögen besitzt in dieser Hinsicht der Rotationsmotor, der gegenüb-ner dem herkömmlichen Verbrennungsmotorsche-ma um den Faktor 1,5 - 2 kleinere Abmessungen besitzt, etwa halb so viele Einzelteile einschließt, unkompliziert in der Herstellung sowie fertigungsgerecht ist, sich durch eine gute Auswuchtung aus-zeichnet, einen höheren mechanischen Wirkungs-grad besitzt, eine geringere Menge von Stickstoffoxiden mit den Abgasen in die Atmosphäre ausstößt.

Allerdings besitzen die bekannten Rotationsmotoren hohe Wärmeverluste dank einer stark entwik-kelten Oberfläche der Verbrennungs- und Expansionskammern, was die Ursache für einen relativ niedrigen indizierten Wirkungsgrad und einen hohen spezifischen Kraftstoffverbrauch ist.

Bekannt ist ein Rotationsmotor (PL, B, 38112), der ein zylindrisches Gehäuse enthält. Im Innern des Ge häuses ist ein zylindrischer Hohlraum ausgeführt, der durch desen zylindrische Wand sowie durch die Stirnwände begrenzt ist. Innerhalb des Gehäuses ist gleichachsig zu der zylindrischen Gehäusewand ein scheibenförmiger Rotor auf vorhandenen Lagerungen angeordnet. In jeder Stirnwand des Gehäuses sind sektorförmige Ausnehmungen ausgeführt, die in der Umfangsrichtung gleichmäßig verteilt sind. Jede der Ausnehmungen besitzt einen flachen Boden, der zu den flachen Abschnitten der Gehäusestirnwand parallel und durch profilierte Oberflächen mit ihnen verbunden ist. Zwischen den sektorförmigen Ausnehmungen ist an der Gehäusestirnwand ein Entzündungsmittel angebracht, das im vorliegenden Fall als eine Zündkerze ausgebildet ist. Zwischen jeder Gehäusestirnwand und Rotorstirnwand sind sektorförmige Verdichtungs- und Expansionszonen sowie eine Verbrennungszone gebildet, die hinter der Verdichtungszone in der Umlaufrichtung des Rotors liegt. Der Rotor weist an seiner Stirnfläche durchgehende Radialnuten auf, in denen in der axialen Richtung frei bewegbar Plattenkolben angeordnet sind, die über ihre Stirnflächen mit den Gehäusestirnwänden zusammenwirken und die sektorförmigen Zonen in voneinander isolierte Kammern veränderlichen Volumens unterteilen. Zur Senkung des Reibungswiderstandes bei der Bewegung der Plattenkolben sind diese in Kugellagern angeordnet. Im Gehäuse ist ein Mittel zum Einlaß mindestens einer Brenngemischkomponente, das mit der Verdichtungszone in Verbindung steht, sowie ein Abgasauslaßmittel vorhanden, das mit der Expansionszone in Verbindung steht. Zur Abkühlung des Motorgehäuses sind in seinen Stirnwänden Hohlräume ausgeführt, die mit einer Kühlmittelquelle in Verbindung stehen.

Eine charakteristische Besonderheit dieses Rota tionsmotors liegt in der spaltförmigen Ausführung von sektorförmigen Kammern.

Beim Rotorumlauf gelangt das Brenngemisch in die Verdichtungskammer. Danach bewegt sich das Brenngemisch in die Verbrennungszone, wo es von der Zündkerze entzündet wird und verbrennt. Bei ihrer Bewegung in die Expansionszone wirken die Gase auf die aus dem Rotor vorstehenden Plattenkolbenflanken ein, wodurch ein Drehmoment am Rotor entsteht, das von der Rotorwelle zum Verbraucher geleitet wird.

Die Verbrennung des Gemisches findet in der spaltförmigen Verbrennungskammer statt, die durch eine recht ausgedehnte Wärmeabgabefläche der Kammerwände und ein relativ geringes Volumen gekennzeichnet ist. Daher kommt es infolge hoher Wärmeverluste in die Gehäuse- und Rotor-stirnwände, wegen des ebenen Strömungscharak-ters des Brenngemisches im Spalt, der keine volu-menmäßige Durchmischung desselben gewährlei-stet, sowie wegen einer schwachen Turbulenz des Brenngemischstroms zu keiner vollständigen Verbrennung des Brenngemisches. Dies ruft einen er-höhten spezifischen Krafstoffverbrauch hervor, be-dingt einen erhöhten CO-Gehalt und einen erhöh-ten Gehalt an nichtausgebrannten Kohlenwasser-stoffen und weiteren toxischen Produkten der unvollständigen Kraftstoffverbrennung im Abgas und bewirkt auch eine verstarkte Ölkohlebildung sowie Plattenkolbenverschleiß.

Dieser Motor besitzt eine erhöhte Detonationsneigung, die durch einen weiten Abstand der meisten Einzelpunkte der spaltförmigen Verbrennungskammer von der Zündkerze und ein recht gleichmäßiges Temperaturfeld der Rotor- und Gehäusestirnwände bedingt ist. Dies schränkt den Verdichtungsgrad des Brenngemisches ein, verringert den indizierten Wirkungsgrad und setzt die Anwendung von Kraftstoffen mit hoher Oktanzahl voraus. Im Detonationsbetrieb geht die Motorleistung rasch herunter, die maxi male Temperatur und der Druck aber nehmen rasch zu, was eine schnelle Beschädigung der Motorkolben mit sich bringt.

In der Konstruktion dieses Motors läßt sich der hocheffektive Dieselzyklus bzw. der Zyklus mit gemischter Kraftstoffzuführung infolge erschwerter Brenngemischzerstäubung und Durchmischung des Brenngemisches mit der Luft im gesamten Volumen der spaltförmigen Verbrennungskammer vor allem wegen des ebenen Strömungscharakters der Luft in der letzteren bei einem kleinen Spalt von 0,4 - 0,8 mm zwischen den Gehäuse- und den Rotorstirnwänden nur schwer realisieren.

In der Konstruktion dieses Motors steht ein Teil der Plattenkolbenoberfläche während der Brennkammerbildung über die Rotorstirnfläche stets vor und erfährt beim Verbrennen des Gemisches die Einwirkung der Verbrennungsprodukte bei einer Temperatur von 2500 - 2700 K und einem Druck von 3 - 10 MPa, was eine intensive Abkühlung derselben erfordert. Allerdings ist in der Konstruktion des in Rede stehenden Verbrennungsmotors keine Durchflußschmierung sowie keine Abkühlung der reibenden Oberflächender Plattenkolben und des Rotors vorgesehen, was die Motorbetriebsdauer begrenzt.

Darüber hinaus führt die Anordnung der Plattenkolben in Kugellagern zur Erhöhung der Masse der beweglichen Elemente und somit zur Steigerung des Kontaktdruckes der Plattenkolben auf die Gehäusestirnwände und zum schnellen Verschleiß derselben.

Offenbarung der Erfindung

Der Erfindung liegt die Aufgabe zugrunde, einen Rotationsmotor zu schaffen, in dem dank der konstruktiven Ausführung der Verbrennungszone eine Reduzierung des Verhältnisses des Flächeninhalts der Verbrennungszone zum Volumen derselben gewährleistet wäre, was den Motorwirkungsgrad zu erhöhen erlauben würde.

Diese Aufgabe ist dadurch gelöst, daß der Rotationsmotor einen scheibenförmigen Rotor, der auf Lagerungen in einem Gehäuse angeordnet ist, das einen zylindrischen Hohl raum besitzt, der den scheibenförmigen Rotor umfaßt und durch eine zylindrische Wand sowie Stirnwände begrenzt ist, wobei in jeder von ihnen in der Umfangsrichtung gleichmäßig verteilte sektorförmige Ausnehmungen ausgeführt sind, wobei jede der Ausnehmungen einen flachen Boden besitzt, der zu dem flachen Abschnitten der Gehäusestirnwand parallel und über profilierte Oberflächen mit ihnen verbunden ist, sowie ein Entzündungsmittel enthält, das zwischen den sektorförmigen Ausnehmungen in einem der flachen Abschnitte einer jeden Gehäusestirnwand angebracht ist, die mit der Rotorstirnfläche sektorförmige Zonen bildet: eine Verdichtungszone, die mit einem Mittel zum Einlaß mindestens einer Brenngemischkomponente in Verbindung steht, eine Expansionszone, die mit einem Abgasauslaßmittel in Verbindung steht, sowie eine Verbrennungszone, die hinter der Verdichtungszone in der Umlaufrichtung des Rotors liegt, der gleichmäßig verteilte durchgehende Radialnuten aufweist, in denen Plattenkolben in der axialen Richtung frei angeordnet sind, die über ihre Stirnflächen mit den Gehäusestirnwänden zusammenwirken und die sektorförmigen Zonen in voneinander isolierte Kammern veränderlichen Volumens unterteilen, erfindungsgemäß in den Stirnflächen des Rotors zwischen den Plattenkolben Aussparungen ausgeführt und die Entzündungsmittel innerhalb einer ringförmigen Zone angeordnet sind, die zur Umlaufachse des Rotors konzentrisch und durch eine untere, der Rotorachse zugewandte Aussparungskante sowie eine obere, dem Rotorumfang zugewandte Aussparungskante begrenzt ist, während der Zentralwinkel, in dem sich die Aussparung befindet, kleiner als der Zentralwinkel der flachen Abschnitte der Gehäusestirnwände ist.

Die Ausführung von Aussparungen an den Rotorstirnflächen gestattet es, die Spalte zwischen den Gehäuse-und Rotorstirnwänden auf ein Minimum zu reduzieren, auf eine spaltförmige Verbrennungskammer zu verzichten und den Verbrennungsvorgang in die vorerwähnten Aussparungen zu verlegen, weil praktisch das gesamte Brenngemisch nach dem Verdichten in diese Aussparungen kommt, wo es sich entzündet und verbrennt.

Dabei ist das Verhältnis des Flächeninhalts der an der Rotorstirnwand ausgeführten Aussparung, die die Funktion einer zum Verbrennen des Brenngemisches bestimmten Brennkammer erfüllt, zum Volumen derselben viel kleiner als das Verhältnis des Flächeninhalts der spaltförmigen Verbrennungskammer zum Volumen derselben, was die Wärmeverluste stark zu senken und die Verwirbelung des Brenngemisches in der Aussparung am Ende eines Verdichtungszyklus zu intensivieren erlaubt, was wiederum das Verbrennen des Brenngemisches zu beschleunigen, einen hohen Verbrennungsgrad zu erreichen und dadurch den Motorwirkungsgrad zu erhöhen gestattet.

Der geringe Abstand aller Aussparungspunkte vom Entzündungsmittel gewährleistet die Entzündung des Brenngemisches vor allem eben in der Aussparung, d. h. in der Zone mit der höchsten Wändetemperatur, bei nachfolgender unwesentlicher Ausbreitung des Brennvorganges in die Spalte mit "kalter" Wandoberfläche. Dadurch wird die Gefahr einer Detonationsentstehung vermieden, der Verdichtungsgrad erhöht und somit der indizierte Motorwirkungsgrad vergrößert.

Die Ausführung der Aussparung innerhalb eines Zentralwinkels, der kleiner als der Zentralwinkel der flachen Abschnitte der Gehäusestirnwände ist, gestattet es, den spezifischen Krafstoffverbrauch zu verringern und eine Erhöung des indizierten Wirkungsgrades zu erzielen.

Zweckmäßigerweise wird der Rotor relativ zu den Stirnwänden des Gehäuses mit einem minimalen Spalt innerhalb von 0,03 - 0,3 mm angeordnet.

Dies gestattet, das Volumen der Spalte zwischen den Rotor- und Gehäusestirnwänden auf ein Minimum zu reduzieren, die Verbrennung des Gemisches in denselben praktisch vollkommen auszuschließen und hierdurch die Wärmeverluste in die Rotor- und Gehäusestirnwände, die in das Kühlsystem abgeleitet werden, stark zu vermindern.

Bei einer Verkleinerung des Spaltes zwischen den Rotorstirnflächen und den flachen Abschnitten der Gehäuse stirnwände bis auf weniger als 0,03 mm ist eine Reibung dieser Oberflächen wegen der beim Motorbetrieb unvermeidlich auftretenden wärmebedingten und mechanischen Verformungen der Motorelemente möglich, was ihre Zerstörung bewirken kann.

Eine Vergrößerung des genannten Spaltes auf über 0,3 mm ist unzweckmäßig, weil dem Aussparungsvolumen das Volumen des jeweiligen Spaltes hinzugefügt wird, wo eine ineffektive Verbrennung des Brenngemisches stattfindet, da die Spalte eine große Wärmeabgabefläche an ihren Wänden besitzen. Daher kommt es infolge hoher Wärmeverluste in die Rotorstirnflächen, die flachen Gehäuseabschnitte und die vorstehenden Plattenkolbenteile wegen des ebenen Strömungscharakters des Brenngemisches im Spalt, der keine volumenmäßige Durchmischung gewährleistet, sowie wegen der schwachen Turbulenz des Brenngemischstromes zu keiner vollständigen Verbrennung des Brenngemisches. Dies ruft einen erhöhten spezifischen Kraftstoffverbrauch hervor, bedingt einen erhöhten CO-Gehalt sowie einen erhöhten Gehalt an toxischen Produkten der unvollständigen Kraftstoffverbrennung im Abgas und führt zur verstärkten Ölkohlenbildung und zum Plattenkolbenverschleiß

Zweckmäßigerweise ist die Aussparungswand mindestens von einem Teil der Rotationsfläche gebildet.

Diese Ausführung der Aussparung gestattet es, ein minimales Verhältnis der Oberfläche derselben zu ihrem Volumen zu erreichen, die Wärmeverluste in das Kühlsystem zu senken, ein gutes Einströmen des Brenngemisches in die Aussparung am Ende eines Verdichtungszyklus sowie ein gutes Ausfließen des Gases zu Beginn eines Expansionszyklus zu gewährleisten, die Entstehung von Stauzonen zu vermeiden, die eine schlechtere Durchmischung des Brenngemisches bewirken können, sowie den Verbrennungsgrad des Kraftstoffes zu erhöhen.

In der Motorkonstruktion ist zweckmäßigerweise ein Mittel zur Verhinderung des Überströmens des gasförmigen Mediums zwischen den Kammern veränderlichen Volumens vorgesehen, das sich zwischen der zylindrischen Gehäusewand und dem Rotor befindet, mit dem letzteren verbunden ist und mit den Stirnwänden des Gehäuses kontaktiert.

Dies gestattet es, das Überströmen des gasförmigen Mediums zwischen den Kammern auf ein Minimum zu reduzieren und dadurch den Motorwirkungsgrad zu erhöhen.

Das Mittel zur Verhinderung des Überströmens des gasförmigen Mediums zwischen den Kammern veränderlichen Volumens kann einen Ring, der am Rotorumfang angebracht und mit dem Rotor starr verbunden ist, wobei an der der zylindrischen Gehäuseoberfläche zugewandten Ringflanke eine Vielzahl von Nuten ausgeführt ist, sowie ein Verkleidung einschließen, die konzentrisch zum Ring angeordnet, mit der zylindrischen Gehäusewand starr verbunden ist und gemeinsam mit den Nuten eine Labyrinthdichtung bildet.

Diese Ausführung des Mittels zur Verhinderung des Überströmens des gasförmigen Mediums zwischen den Kammern veränderlichen Volumens gestattet es, dank der Schaffung eines hohen hydraulischen Widerstandes im Bewegungsweg des überströmenden Gases die Gasleckverluste zu verringern. Im praktischen Motorenbau fand man heraus, daß eine Labyrinthdichtung mit kleinen Spalten und sogar mit einem Nullspalt ausgeführt sein kann, wenn man auf den feststehenden Ring eine Graphit-Aluminium-Überzugsschicht bzw. irgendeinen anderen Überzug aufträgt. Der Nullspalt ist unter anderem dadurch möglich, daß die erwähnte Überzugsschicht weich ist und die Labyrinthvorsprünge für sich selber Nuten schneiden können. Diese Labyrinthdichtungen besitzen ein geringeres Widerstandsmoment beim Einwirken von Reibungskräften als die Kontaktdichtungen.

Bei Anwendung einer Labyrinthdichtung wird gleichzeitig auch die Aufgabe der Verlängerung der Motorbetriebsdauer gelöst. Der am Rotorumfang angeordnete und mit dem Rotor starr verbundene Ring verhindert die Berührung der Plattenkolben mit der zylindrischen Gehäusewand, wo die Umfangsgeschwindigkeiten und die auf die Plattenkolben einwirkenden Fliehkräfte sehr groß werden. Dank der Anordnung des Ringsgleiten die Plattenkolben, die eine hin und hergehende Bewegung in der axialen Richtung ausführen, an der Ringinnenfläche mit einer um den Faktor 4 -6 kleineren Geschwindigkeit als ihre Umfangsgeschwindigkeit am Außendurchmesser des Rotors, was den Verschleiß der Plattenkolbenseitenflächen stark verringert. Dies gestattet es, die Plattenkolben anhand ihrer Seitenflächen zu zentrieren, was das Schiefstellen und Verklemmen der Platten zu vermeiden erlaubt. Da aber die Plattenkolben sich dabei intensiver am Außendurchmesser abnutzen, wo höhere lineare Geschwindigkeiten bestehen, während sie am kleineren Durchmesser mit den Gehäusestirnwänden nach wie vor in Berührung stehen, so beginnt im entstandenen Kleinspalt eine gashydrodynamische Dichtung effektiv zu wirken, die die Funktion eines Lagers mit erfüllt, was eine höhere Betriebsdauer der Schaufeln ermöglicht.

Zweckmäßigerweise ist an der Außenfläche des Ringes ein ringförmiger Sammelkanal ausgeführt, der über im Ring vorgesehen Kanäle mit im Rotor ausgeführten Radialkanälen in Verbindung steht, die mit den durchgehenden Radialnuten und mit einem im Rotor ausgeführten Axialkanal verbunden sind, der mit einer Schmiermittelquelle in Verbindung steht, die über einen Abflußkanal mit dem ringförmigen Sammelkanal verbunden ist.

Dies gestattet es, eine kontinuierliche Zuführung des Schmiermittels zu den reibenden Oberflächen beim Betrieb, eine ständige Reinigung der letzteren zwecks Entfernung von Verschleißprodukten, eine Reduzierung der Reibungsverluste sowie eine beträchtliche Verlangsamung des Plattenkolbenverschleißes sowohl an den Seiten- wie auch an den Stirnflächen, darunter dank einer intensiven Abkühlung der wärmeintensivsten Elemente des Rotationsmotors, nämlich der Plattenkolben und des Rotors, zu gewährleisten. Gleichzeitig kann dank der hydrodynamischen Dichtung das Überströmen des gasförmigen Mediums zwischen den Kammern veränderlichen Volumens vermindert werden. Darüber hinaus gestattet es die beschriebene Ausführung des Mittels zur Verhinderung des Über strömens des gasförmigen Mediums zwischen den Kammern veränderlichen Volumens in Kombination mit dem System von Kanälen im Rotor, die zur Schmierung und Kühlung der Plattenkolben und des Rotors eingeführt sind, auf eine Sonderpumpe zum Schmiermitteleinpressen zu verzichten, weil in diesem Fall der Rotor selber mit den in ihm vorhandenen Radialkanälen die Funktionen einer Kreiselpumpe erfüllt.

Kurze Beschreibung der Zeichnungen

Im folgenden wird die Erfindung in einer ausführlichen Beschreibung des Rotationsmotors unter Bezugnahme auf beiliegende Zeichnungen näher erläutert; es zeigt:

Fig. 1 die Gesamtansicht des Rotationsmotors, gemäß der Erfindung, im Längsschnitt;

Fig. 2 den Schnitt nach Linie II-II der Fig. 1, Ansicht in der Abwicklung;

Fig. 3 den Schnitt nach Linie III-III der Fig.1;

Fig. 4 eine Ansicht in der Axonometrie der Gehäusestirnwand;

Fig. 5 einen Plattenkolben, Seitenansicht;

Fig. 6 den Schnitt nach Linie VI-VI der Fig. 5;

Fig. 7 verlustloser Zyklus des Rotationsmotors mit der Wärmezuführung bei konstantem Volumen (V = const) in Koordinaten p-V;

Fig. 8 Ausführungsform des Entzündungsmittels in Gestalt einer Düse;

Fig. 9 Ausführungsform des Entzündungsmittels in Gestalt einer Düse-Zündkerze;

Fig.10 verlustloser Zyklus des Rotationsmotors mit Kompressionszündung mit der Wärmezuführung bei konstantem Volumen (V = const) und konstantem Druck (p = const) in Koordinaten p-V;

Fig. 11 verlustloser Zyklus des Rotationsmotors mit der Wärmezuführung bei konstantem Druck (p = const) in Koordinaten p-V.

Beste Ausführungsform der Erfindung

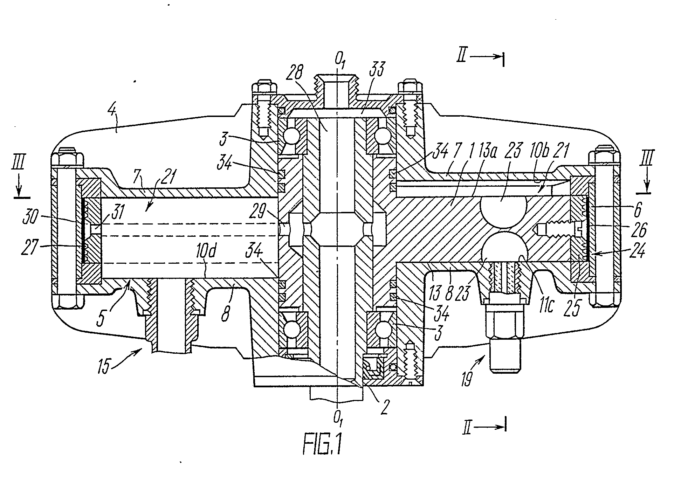

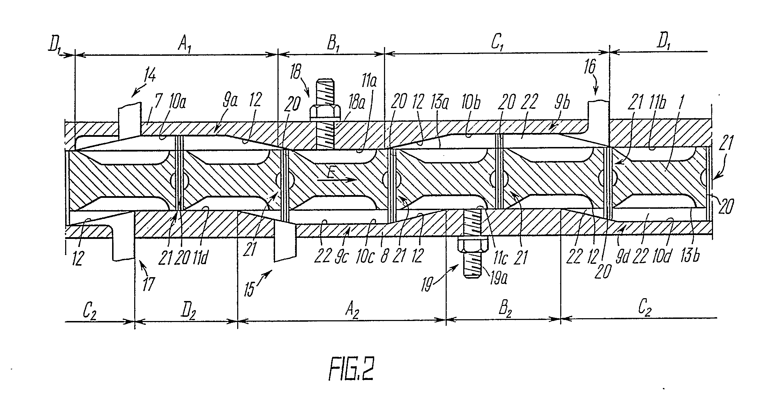

Der erfindungsgemäß ausgeführte und nach dem Otto-Zyklus arbeitende Rotationsmotor enthält einen scheibenförmigen Rotor 1 (Fig. 1), der auf einer Welle 2 angebracht ist und in Lagerungen 3 in einem Gehäuse 4 umläuft, das einen zylindrischen Hohlraum 5 besitzt, der den scheibenförmigen Rotor 1 umfaßt und durch eine zylindrische Wand 6 sowie durch Stirnwände 7, 8 begrenzt ist. In jeder der Stirnwände 7, 8 sind sektorförmige Ausnehmungen 9a (Fig. 2), 9b, 9c, 9d ausgeführt, die in der Umfangsrichtung gleichmäßig verteilt sind. Jede der Ausnehmungen 9a, 9b, 9c, 9d besitzt einen flachen Boden 10a, 10b, 10c, 10d, der zu flachen Abschnitten 11a, 11b, 11c, 11d der Stirnwände 7, 8 des Gehäuses 4 parallel und über profilierte Oberflächen 12 mit ihnen verbunden sind. Die Oberflächen der sektorförmigen Ausnehmungen 9a, 9b, 9c, 9d der Stirnwände 7, 8 bilden gemeinsam mit Stirnflächen 13a, 13b des Rotors 1 in der Umlaufrichtung des Rotors 1 in abwechselnder Reihenfolge liegende Verdichtungszonen $A_1$, $A_2$, Verbrennungszonen $B_1$, $B_2$, Expansionszonen

$C_1$, $C_2$ und Trennzonen $D_1$, $D_2$. Die Verdichtungszonen $A_1$, $A_2$ stehen mit Mitteln 14, 15 zum Einlaß mindestens einer Brenngemischkomponente in Verbindung, die im Anfangsbereich der Verdichtungszonen $A_1$, $A_2$ liegen. Die Expansionszonen $C_1$, $C_2$ stehen mit im Endbereich der Expansionszonen $C_1$, $C_2$ liegenden Abgasauslaßmitteln 16, 17 in Verbindung. In den flachen Abschnitten 11a, 11c der Stirnwände 7, 8 des Gehäuses 4 sind Entzündungsmittel 18, 19 angeordnet, die mit den Verbrennungszonen $B_1$, $B_2$ in Verbindung stehen. Im Rotor 1 sind gleichmäßig verteilte durchgehende Radialnuten 20 ausgeführt, in denen Plattenkolben 21, die über ihre Stirnflächen mit den Stirnwänden 7, 8 zusammenwirken, in der axialen Richtung frei angeordnet sind. Die Plattenkolben 21 unterteilen in Zonen $A_1$, $A_2$, $B_1$, $B_2$, $C_1$, $C_2$, $D_1$, $D_2$ in voneinander isolierte Kammern 22 veränderlichen Volumens. An den Stirnflächen 13 des Rotors 1 sind zwischen den Plattenkolben 21 Aussparungen 23 (Fig. 1) ausgeführt, deren Wände mindestens von einem Teil der Rotorrotationsfläche, in der vorliegenden Ausführungsform von einem Teil der torusähnlichen Rotationsfläche gebildet sind. Die Entzündungsmittel 18, 19 sind innerhalb einer ringförmigen Zone angeordnet, die zur Umlaufachse $O_1$ - $O_1$ des Rotors 1 konzentrisch und durch eine untere, der Umlaufachse $O_1$ - $O_1$ des Rotors 1 zugewandten Kante der Aussparung 23 sowie eine obere, dem Umfang des Rotors 1 zugewandten Kante dieser Aussparung 23 begrenzt ist. In der vorliegenden Ausführungsform stellen die Entzündungsmittel 18, 19 Zündkerzen 18a, 19a dar.

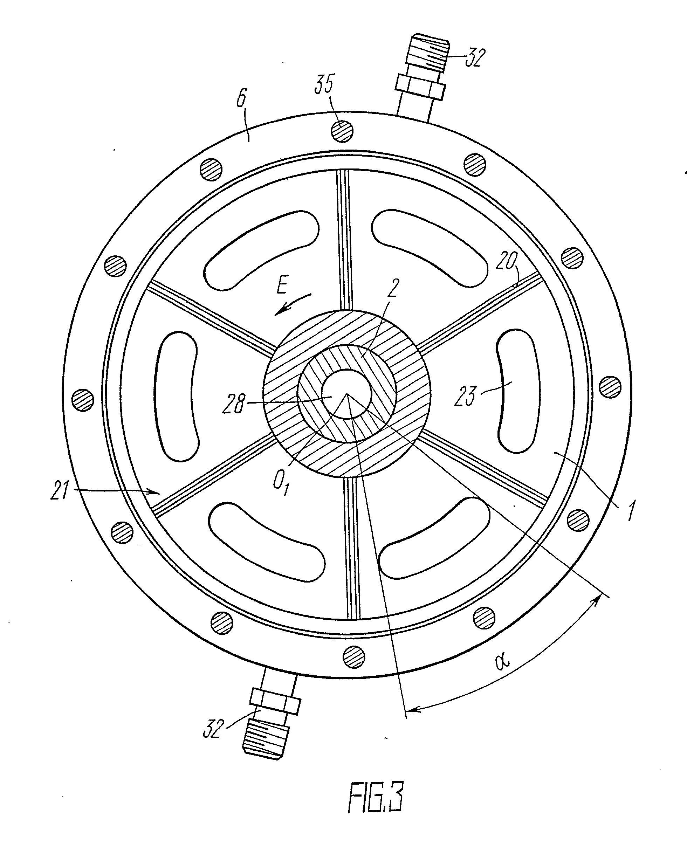

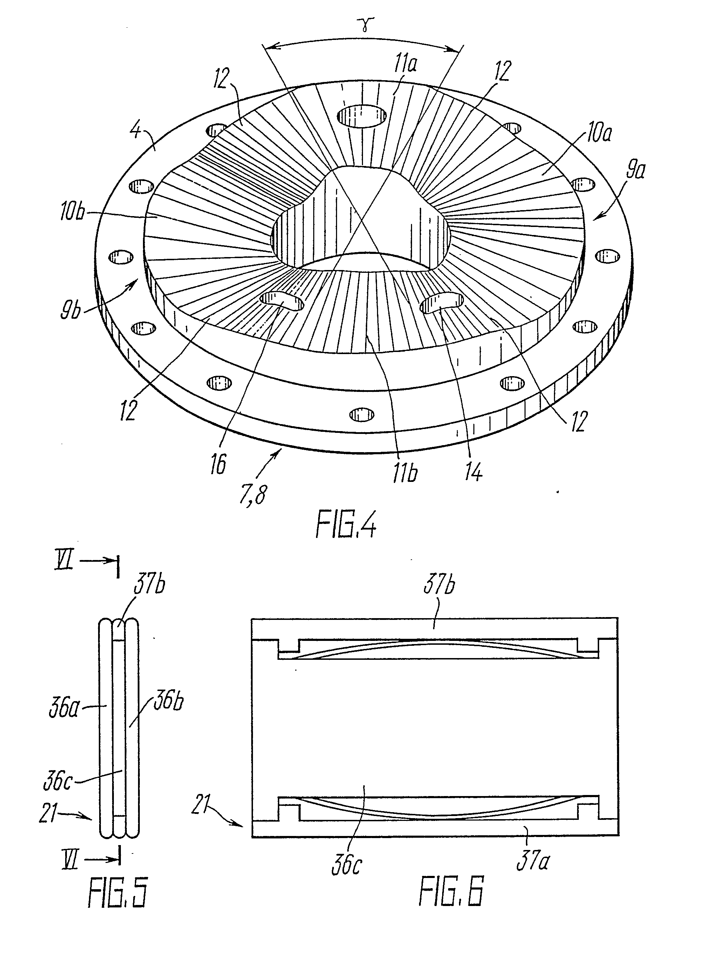

Die Aussparungen 23 sind auf eine solche Weise ausgeführt, daß der Zentralwinkel $\alpha$ (Fig. 3), in dessen Öffnung die Aussparung 23 liegt, kleiner als der Zentralwinkel $\gamma$ (Fig. 4) der flachen Abschnitte 11a, 11b, 11c, 11d der Stirnwände 7, 8 des Gehäuses 4 ist.

Der Rotor 1 ist mit einem minimalen Spalt zwischen den Stirnwänden 13a, 13b des Rotors 1 und den Stirnwänden 7, 8 des Gehäuses 4 innerhalb von 0,03 - 0,3 mm angeordnet; in der vorliegenden Ausführungsform beträgt der Spalt 0,1 mm.

In der Motorkonstruktion ist ein Mittel 24 zur Verhinderung des Überströmens des gasförmigen Mediums zwischen den Kammern 22 veränderlichen Volumens vorgesehen. Das Mittel 24 ist zwischen der zylindrischen Wand 6 des Gehäuses 4 und dem Rotor 1 angeordnet, ist mit dem letzteren verbunden und kontaktiert mit den Stirnwänden 7, 8 des Gehäuses 4.

Das Mittel 24 zur Verhinderung des Überströmens des gasförmigen Mediums zwischen den Kammern 22 veränderlichen Volumens enthält einen Ring 25, der am Umfang des Rotors 1 angebracht und mit ihm starr verbunden ist, sowie eine Verkleidung 26. An der der zylindrischen Oberfläche 6 des Gehäuses 4 zugewandten Flanke des Ringes 25 ist eine Vielzahl von Nuten 27 ausgeführt. Die Verkleidung 26 ist konzentrisch zum Ring 25 angebracht und mit der zylindrischen Wand 6 des Gehäuses 4 starr verbunden. Der Ring 25 bildet gemeinsam mit den Nuten 27 eine Labyrinthdichtung. Zur Gewährleistung eines "Null" spaltes kann die Verkleidung 26 aus einem verhältnismäßig weichen Material, beispielsweise aus Graphitaluminium, ausgeführt sein.

Zur Gewährleistung der Schmierung der reibenden Oberflächen der Plattenkolben 21 und des Rotors 1 sind in dem letzteren ein Axialkanal 28 sowie Radialkanäle 29 ausgeführt, die den Axialkanal 28 mit den durchgehenden Radialnuten 20 verbinden, in denen die Plattenkolben 21 untergebracht sind.

Zur Abkühlung des Rotors 1 und der Plattenkolben 21 sowie zur Gewährleistung ihrer Durchflußschmierung zum Reinigen der reibenden Oberflächen von den Verschleißprodukten ist in der zylindrischen Wand 6 des Gehäuses 4 bzw. an der Außenfläche des Ringes 25 ein ringförmiger Sammelkanal 30 in Gestalt einer Ringnut ausgeführt.

Der Sammelkanal 30 steht über im Ring 25 ausgeführte Kanäle 31 mit den im Rotor 1 ausgeführten Radialkanälen 29 in Verbindung, wobei die Radialkanäle 29 mit den durchgehenden Radialnuten 20 in Verbindung stehen. Der Axialkanal 28 und der ringförmige Sammelkanal 30 stehen über einen Abflußkanal 32 (Fig. 3) mit einer (in den Figuren nicht mitabgebildeten) Schmiermittelquelle in Verbindung.

Zum Verhindern des Gaseindringens in einen Hohlraum 33 (Fig. 1) des Schmiersystems sowie zum Abkühlen des Gehäuses 4 und Überströmen des Öles in den zylindrischen Hohlraum 5 sind am Rotor 1 Dichtungen 34 angebracht.

Die Stirnwände 7, 8 sind mittels Schrauben 35 zusammengehalten.

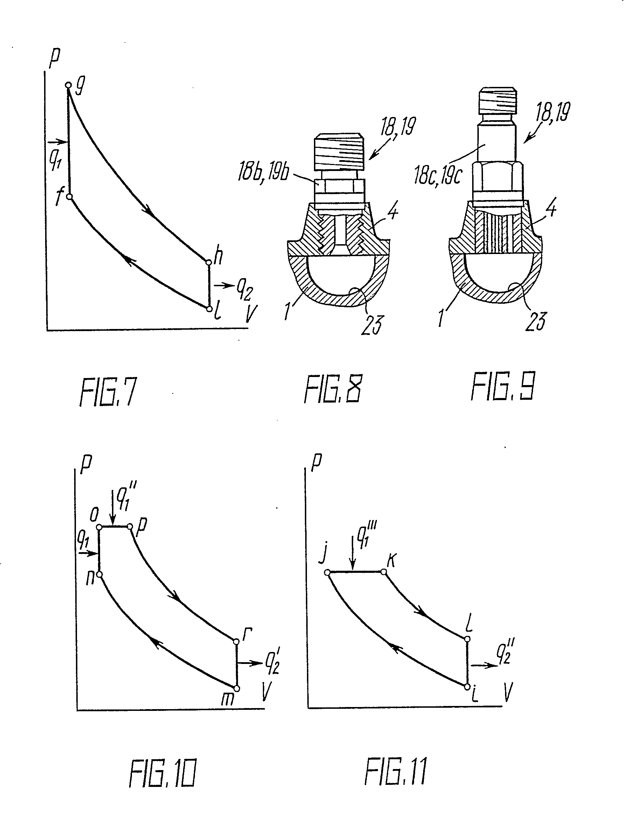

Im allgemeinen Fall sollen die Plattenkolben 21 eine kleinstmögliche Masse, eine hohe Verschleißfestigkeit und Wärmebeständigkeit besitzen, eine zuverlässige Abdichtung der Kammern veränderlichen Volumens garantieren. Angesichts der aufgeführten Anforderungen sind die Plattenkolben 21 (Fig. 5) aus drei Platten ausgeführt, und zwar derart, daß Platten 36a, 36b, 36c relativ zueinander gleiten können, wobei die zentrale Platte 36c (Fig. 6) mit abgefederten Dichtungselementen 37a, 37b ausgeführt sind. Dies ermöglich es, den Kontaktdruck einer jeden von den Seitenplatten 36a, 36b sowie der abgefederten Dichtungselemente 37a, 37b auf die Stirnwände 7, 8 des Gehäuses 4 etwa um das Dreifache zu verringern und dadurch ihre Betriebsdauer zu verlängern, eine Abdichtung nicht über eine lineare Oberfläche, wie dies im Wankelmotor der Fall ist, sondern über drei lineare Oberflächen zu gewährleisten, die Abdichtung des Radialspaltes zu verbessern und die Gasverluste infolge des Überströmens des Gases durch die Plattenkolben 21 hindurch herabzusetzen.

Der Betrieb des Rotationsmotors geschieht auf die folgende Weise. Beim Umlauf des Rotors 1 in der durch eine Pfeil E (Fig. 2) angedeuteten Richtung gelangt das Brenngemisch über die Mittel 14, 15 zum Einlaß zumindest einer Brenngemischkomponente in die Verdichtungszonen $A_1$, $A_2$. Im weiteren wird das Brenngemisch in den Kammern 22 veränderlichen Volumens "eingesperrt", in den Verdichtungszonen $A_1$, $A_2$ zusammengedrückt und zum Überströmen in die Aussparungen 23 veranlaßt, wobei eine intensive Verwirbelung des Brenngemisches in den Aussparungen 23 am Ende eines Verdichtungszyklus gewährleistet wird. Im Augenblick des Durchgangs der Aussparungen 23 unter den Entzündungsmitteln 18, 29 wird das Brenngemisch in den Verbrennungszonen $B_1$, $B_2$ entzündet und verbrennt bei konstant bleibendem Volumen der Aussparungen 23. Beim Übergang der Aussparungen 23 in die Expansionszonen $C_1$, $C_2$ setzt der Prozeß der Gasexpansion ein. Die expandierenden Gase wirken auf die aus dem Rotor 1 vorstehenden Flanken der Plattenkolben 21 ein und erzeugen ein Drehmoment am Rotor 1, von dessen Welle 2 dieses Moment zum Verbraucher geleitet wird. Die abgearbeiteten Gase werden von den Plattenkolben 21 aus der Expansionszone $C_1$, $C_2$ über die Abgasauslaßmittel 16, 17 ausgestoßen, die sich im Endbereich der Expansionszo nen $C_1$, $C_2$ befinden. Anschaulicher ist die Funktion des obenbeschriebenen Verbrennungsmotors mit der Wärmezuführung bei V = const aus dem in Fig. 7 dargestellten verlustlosen Zyklus ersichtlich. Der Prozeß $\ell$ - f ist die adiabatische Verdichtung des Brenngemisches in den Verdichtungszonen $A_1$, $A_2$. Der Prozeß f - g ist die isochore Wärmezuführung $q_1$ in die Verbrennungszonen $B_1$, $B_2$. Der Prozeß g - h ist die adiabatische Gasexpansion in den Expansionszonen $C_1$, $C_2$. Der Prozeß h - l ist die isochore Abkühlung der Brenngemischverbrennungsprodukte mit der Wärme $q_2$ (der Auspuff von Verbrennungsprodukten mittels der Plattenkolben 21 geschieht durch die Abgasauslaßmittel 16, 17).

Es ist zu erwähnen, daß angesichts der Anordnung des Rotors 1 im Gehäuse 4 mit einem minimalen Spalt zwischen den Stirnflächen 13a, 13b des Rotors 1 und den Stirnwänden 7, 8 des Gehäuses 4 innerhalb von 0,03 - 0,3 mm die Hochtemperaturverbrennungsprodukte auf die vorstehenden Teile der Plattenkolben 21 bis zum Augenblick nicht einwirken, in dem sie in die Expansionszonen $C_1$, $C_2$ austreten, was einen entlasteten Betriebswärmezustand der Plattenkolben 21 in den Zonen $B_1$, $B_2$ gewährleistet.

Die im vorstehenden beschriebene Ausführungsform des Rotationsmotors ist nur als ein Beispiel angeführt und schränkt den Erfindungsumfang in keiner Weise ein. Denkbar sind verschiedene Modifikationen und Vervollkommnungen der Erfindung ohne Abweichung von deren Prinzip bzw. vom Erfindungsgehalt, die durch die Patentansprüche festgelegt sind. Nachstehend ist eine weitere Ausführungsform des Rotationsmotors angeführt, der nach dem Zyklus mit gemischter Wärmezuführung arbeitet. Dieser Rotationsmotor entspricht völlig dem Konstruktionsschema der beschriebenen Ausführungsform des nach dem Otto-Zyklus arbeitenden Rotationsmotors, allerdings stellen die Entzündungsmittel 18, 19 in diesem Fall entweder eine Düse 18b (Fig. 8), 19b oder aber in der Umlaufrichtung des Rotors 1 aufeinanderfolgend angeordnete Düsen-Zündkerzen 18c (Fig. 9), 19c dar. Die Konstruktion der Düsen-Zündkerzen 18c, 19c erlaubt es, das Einspritzen der Brenngemischkomponente (des Kraftstoffes) unter gleichzeitigem zuverlässig herbeigeführten Entzünden des letzteren vorzunehmen, wobei die Düsen 18b und 19b nur zur Kraftstoffeinspritzung bestimmt sind. Die Einlaßmittel 14, 15 sind zum Zuführen in den Motor einer der Brenngemischkomponenten, nämlich eines Oxydationsmittels (beispielsweise Luft), bestimmt. Ein solcher Motor wird den größten indizierten Wirkungsgrad haben.

Der erfindungsgemäße Motor kann auch mit schweren Marken von flüssigen Kohlenwasserstoff-Kraftstoffen arbeiten, aber bei niedrigeren Rotordrehzahlen.Der verlustlose thermodynamische Arbeitszyklus eines solchen Verbrennungsmotors mit gemischter Wärmezuführung ist in Fig. 10 gezeigt.

Die Kurve m - n gibt die adiabatische Verdichtung einer Brenngemischkomponente, nämlich des Oxydationsmittels (beispielsweise Luft), in den Verdichtungszonen $A_1$, $A_2$ wieder. Dabei geht mit dem Verdichtungsprozeß eine Erwärmung des Oxydationsmittels einher, dessen Temperatur eine Höhe erreicht, bei der eine Selbstentzündung des durch die Düsen 18b, 19b bzw. durch die Düsen-Zündkerzen 18c, 19c einströmenden Kraftstoffes stattfindet. Der Prozeß n-o ist die Zuführung einer Wärmemenge $q_1$ in das Brenngemisch nach einer in den Verbrennungszonen $B_1$, $B_2$ liegenden Isochore. Der Prozeß o - p ist die Zuführung einer Wärmemenge $q_1'$ in das Brenngemisch nach einer dem Nachbrennen des Brenngemisches in den Expansionszonen $C_1$, $C_2$ entsprechenden Isobare. Der Prozeß p - r ist die adiabatische Expansion der Brenngemischverbrennungsprodukte in den Expansionszonen $C_1$, $C_2$. Der Prozeß r - m ist die isochore Abkühlung der Brenngemischverbrennungsprodukte mit einer Wärme $q_2$ (Auspuff von Verbrennungsprodukten über die Auslaßmittel 16, 17).

Nachstehend ist eine weitere Ausführungsform des nach dem Dieselzyklus arbeitenden Rotationsmotors angeführt. Ähnlich der vorhergehenden Ausführungsform bleibt das Kon struktionsschema des Rotationsmotors unverändert, die Funktionsweise des Motors ist ebenfalls dieselbe, doch arbeitet der nach dem Dieselzyklus funktionierende Rotationsmotor zum Unterschied vom Rotationsmotor mit gemischtem Zuführungszyklus mit höheren Rotordrehzahlen. Fig. 11 zeigt den verlustlosen Zyklus des Rotationsmotors mit der Wärmezuführung bei konstantem Druck (p = const) in den Koordinaten p-V. Der Prozeß i - j ist die adiabatische Verdichtung einer Brenngemischkomponente, nämlich des Oxydationsmittels(beispielsweise Luft) in den Verdichtungszonen $A_1$, $A_2$. Dabei geht mit dem Verdichtungsprozeß eine Erwärmung des Oxydationsmittels einher, dessen Temperatur eine Höhe erreicht, bei der eine Selbstentzündung des Kraftstoffs stattfindet. Der Prozeß j - k ist die isobare Zuführung einer Wärme $q_1'''$ in das Brenngemisch in den Verbrennungszonen $B_1$, $B_2$, Expansionszonen $C_1$, $C_2$. Der Prozeß k - 1 ist die adiabatische Expansion der Brenngemischverbrennungsprodukte in den Expansionszonen $C_1$, $C_2$. Der Prozeß l - i ist die isochore Abkühlung der Brenngemischverbrennungsprodukte mit einer Wärme $q_2''$ (Auspuff von Verbrennungsprodukten über die Auslaßmittel 16, 17).

Ein wichtiger Vorteil dieses Verbrennungsmotors ist, daß der in die Aussparungen 23 eingespritzte Kraftstoff aus denselben nicht durch die Fliehkraft ausgetragen wird, wie dies für andere Schemas der Rotationsmotoren charakteristisch ist (in allgemeinen Fall dank der Einführung einer zum Vektor der Fliehkraft senkrechten Seitenfläche der Aussparung), sondern in den Aussparungen unter optimalen Bedingungen (mit eventuellem Nachbrennen in der Expansionszone) verbrennt, was eine höhere Vollkommenheit der Verbrennung des Kraftstoffs gewährleistet.

Die beschriebene Konstruktion des erfindungsgemäßen Rotationsmotors bezieht sich nur auf einen Verbrennungsmotor, der durch die Verbrennung von Brenngemischen in Funktion gesetzt wird. Der Motor kann auch durch Dampf, Druckluft bzw. ein anderes Arbeitsmedium angetrieben und als Pumpe bzw. Verdichter benutzt werden. Hierzu müssen in den Verdichtungs- und Expansionskammern in den profilierten Oberflächenabschnitten neben anderen Mitteln Ein- und Auslaßbohrungen extra ausgeführt werden.

In dieser Weise läßt sich im Endergebnis feststellen, daß die Ausführung der Brennkammern in Form von Aussparungen in den Rotorstirnflächen erlaubt:

- die Verluste von ins Kühlsystem abgeführter Wärme stark herabzusetzen;
- die Wärmeintensität der Plattenkolben zu verringern;
- den Verbrennungsgrad des Kraftstoffs zu erhöhen;
- den indizierten Motorwirkungsgrad zu vergrößern;
- den Ausstoß der in den Abgasen enthaltenen Schadstoffe in die Atmosphäre zu vermindern.

Die Anordnung eines Ringes an der zylindrischen Außenfläche des Rotors erlaubt:
- das Überströmen des Gases zwischen den Kammern dank der dabei möglichen Anordnung verschiedener Abdichtungsmittel an der Außenfläche des Ringes zu vermindern;
- ein zuverlässiges Kühl- und Schmiersystem für alle wärmeintensiven Konstruktionselemente mit gleichzeitiger Möglichkeit für die Ausübung der Ölpumpenfunktion den Rotor einzubauen;
- die Betriebsdauer der Plattenkolben dank deren intensiver Abkühlung und Abschmierung sowie dank der Verhinderung einer Berührung derselben mit der zylindrischen Gehäusewand zu verlängern, wobei dadurch neuartige Möglichkeiten zum Formen von die Plattenkolben abdichtenden Dichtungselementen sichergestellt werden.

Die erfindungsgemäße Motorkonstruktion sieht einen umfassenden Einsatz von keramischen Werkstoffen und Verbundwerkstoffen sowie von abfallfreien Herstellungstechnologien für die Motorelemente vor.

Der erwartete effektive Wirkungsgrad sol von 28% bis 55% je nach dem gewählten Arbeitszyklus und den eingesetzten Konstruktionswerkstoffen betragen.

Die Realisierung des Gesamtkomplexes der erfin dungsgemäß vorgeschlagenen technischen Lösungen ermöglicht die Schaffung eines neuartigen hocheffektiven Rotationsmotors, der zum Unterschied vom Wankel-Rotationsmotor besitzt:
- eine einfachere und fertigungsgerechtere Konstruktion;
- ungefähr um den Faktor 1,5 - 2 kleinere Abmessungen und Motormasse;
- ungefähr um den Faktor 1,5 - 2 kleinere Herstellungs- und Betriebskosten;
- einen niedrigeren Geräuschpegel;
- eine vollkommene dynamische Auswuchtung, was irgendwelche Dämpfungssysteme unnötig macht;
- ein höheres und gleichmäßigeres Drehmoment bei niedrigen Motordrehzahlen, was günstige Bedingungen für einen umfassenden Einsatz von Automatikgetrieben schafft;
- das Vermögen, mit flüssigen Kraftstoffen weiter Fraktionszusammensetzung sowie mit gasförmigen Kraftstoffen bei Knappheit von Qualitätskraftstoffen betrieben zu werden, was den Betriebsaufwand für Kraftstoff beträchtlich herabsetzt.

Die genanten Vorteile gestatten es gemeinsam mit potentiell vorhandenen weiten Möglichkeiten zur Reduzierung schädlicher Einwirkung auf die Umwelt, für den erfindungsgemäßen Rotationsmotor jeweilige Einsatzgebiete zu finden.

Gewerbliche Verwertbarkeit

Am effektivsten kann die vorliegende Erfindung im Kraftfahrzeugbau, Flugzeugbau, Schiffbau, Landmaschinenbau sowie auf anderen technischen Gebieten verwendet werden, wo wirtschaftliche, kompakte und leise Verbrennungsmotoren geringer Toxizität mit einer Einheitsleistung bis 100 kW erforderlich sind.

**Ansprüche**

1. Rotationsmotor, der eine scheibenförmigen Rotor (1), der auf Lagerungen (3) in einem Gehäuse (4) angeordnet ist, das eine zylindrischen Hohlraum (5) besitzt, der den scheibenförmigen Rotor (1) umfaßt und durch eine zylindrische Wand (6) sowie durch Stirnwände (7, 8) begrenzt ist, wobei in jeder von ihnen sektorförmige, in der Umfangsrichtung gleichmäßig verteilte Ausnehmungen (9a, 9b, 9c, 9d) ausgeführt sind und eine jede der Ausnehmungen (9a, 9b, 9c, 9d) einen flachen Boden (10a, 10b, 10c, 10d) besitzt, der zu den flachen Abschnitten (11a, 11b, 11c, 11d) der Stirnwand (7, 8) des Gehäuses (4) parallel und über profilierte Oberflächen (12) mit ihnen verbunden ist, sowie ein Entzündungsmittel (18, 19) enthält, das zwischen den sektorförmigen Ausnehmungen (9a, 9b, 9c, 9d) in einem der flachen Abschnitte (11a, 11b) einer jeden Stirnwand (7, 8) des Gehäuses (4) angeordnet ist, die mit der Stirnfläche (13a, 13b) des Rotors (1) eine sektorförmige Verdichtungszone ($A_1$, $A_2$), die mit einem Mittel (14, 15) zum Einlaß mindestens einer Brenngemischkomponente in Verbindung steht, eine sektorförmige Expansionszone ($C_1$, $C_2$), die mit einem Abgasauslaßmittel (16, 17) in Verbindung steht, sowie eine sektorförmige Verbrennungszone ($B_1$, $B_2$) bildet, die hinter der Verdichtungszone ($A_1$, $A_2$) in der Umlaufrichtung des Rotors (1) liegt, der gleichmäßig verteilte durchgehende Radialnuten (20 aufweist, in denen Plattenkolben (21) in der axialen Richtung frei angeordnet sind, die über ihre Stirnflächen mit den Stirnwänden (7, 8) des Gehäuses (4) zusammenwirken und die sektorförmigen Zonen ($A_1$, $A_2$, $B_1$, $B_2$, $C_1$, $C_2$) in voneinander isolierte Kammern (22) veränderlichen Volumens unterteilen, dadurch **gekennzeichnet**, daß an den Stirnflächen (13a, 13b) des Rotors (1) zwischen den Plattenkolben (21) Aussparungen (23) ausgeführt sind und das Entzündungsmittel (18, 19) innerhalb einer ringförmigen Zone angeordnet ist, die zur Umlaufachse ($O_1$

- $O_1$) des Rotors (1) konzentrisch und durch eine untere, der Rotorachse ($O_1$ - $O_1$) zugewandte Kante der Aussparung (23) und eine obere, dem Umfang des Rotors (1) zugewandte Kante der Aussparung (23) begrenzt ist, während der Zentralwinkel ($\alpha$), in dessen Öffnung sich die Aussparung (23) befindet, kleiner als der Zentralwinkel ($\gamma$) der flachen Abschnitte (11a, 11b, 11c, 11d) der Stirnwände (7, 8) des Gehäuses (4) ist.

2. Motor nach Anspruch 1, dadurch **gekennzeichnet**, daß der Rotor (1) in bezug auf die Stirnwände (7, 8) des Gehäuses (4) mit einem minimalen Spalt innerhalb von 0,03 - 0,3 mm angeordnet ist.

3. Motor nach Anspruch 1, dadurch **gekennzeichnet**, daß die Wand der Aussparung (23) mindestens von einem Teil der Rotationsfläche gebildet ist.

4. Motor nach Ansprüchen 1 bzw. 3, dadurch **gekennzeichnet**, daß in ihm Mittel (24) zur Verhinderung des Überströmens des gasförmigen Mediums zwischen Kammern (22) veränderlichen Volumens vorgesehen ist, das sich zwischen der zylindrischen Wand (6) des Gehäuses (4) und dem Rotor (1) befindet, mit dem letzteren verbunden ist und mit den Stirnwänden (7, 8) des Gehäuses (4) kontaktiert.

5. Motor nach Anspruch 4, dadurch **gekennzeichnet**, daß das Mittel (24) zur Verhinderung des Überströmens des gasförmigen Mediums zwischen den Kammern (22) veränderlichen Volumens einen Ring (25), der am Umfang des Rotors (1) liegt und mit ihm starr verbunden ist, wobei an der der zylindrischen Wand (6) des Gehäuses (4) zugewandten Flanke des Ringes (25) eine Vielzahl von Nuten (27) ausgeführt ist, sowie eine Verkleidung (26) einschließt, die konzentrisch zum Ring (25) liegt, mit der zylindrischen Wand (6) des Gehäuses (4) starr verbunden ist und gemeinsam mit den Nuten (27) eine Labyrinthdichtung bildet.

6. Motor nach Anspruch 5, dadurch **gekennzeichnet**, daß an der Außenfläche des Ringes (25) ein ringförmiger Sammelkanal (30) ausgeführt ist, der über im Ring (25) ausgeführte Kanäle (31) mit im Rotor (1) ausgeführten Radialkanälen (29) in Verbindung steht, die mit durchgehenden Radialnuten (20) und einem im Rotor (1) ausgeführten Axialkanal (28) verbunden sind, der mit einer Schmiermittelquelle in Verbindung steht, die über einen Abflußkanal (32) mit dem ringförmigen Sammelkanal (30) verbunden ist.

FIG.1

FIG.2

FIG.3

FIG.4

FIG.5

FIG.6

FIG.7　　FIG.8　　FIG.9

FIG.10　　FIG.11

# INTERNATIONAL SEARCH REPORT

International Application No PCT/SU 88/00181

## I. CLASSIFICATION OF SUBJECT MATTER (if several classification symbols apply, indicate all) 6

According to International Patent Classification (IPC) or to both National Classification and IPC

IPC$^4$: F 02 B 53/00

## II. FIELDS SEARCHED

### Minimum Documentation Searched 7

| Classification System | Classification Symbols |
|---|---|
| IPC$^4$: | F 02 B 53/00, 55/14 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | US, A, 3489126 (KARL NICOLAUS REGER), 13 January 1970, & RO, A, 50845, 11 May 1968 | 1-6 |
| A | DE, C, 631254 (JOHANNES KELLER), 16 June 1936 | 1-6 |
| A | US, A, 4401070 (JAMES L. McCANN), 30 August 1983, see the abstract & EP, A3, 62447, 23 February 1983 AU, B, 550117, 06 March 1986 BR, A, 8201833, 01 March 1983 JP, A, 57-173529, 25 October 1982 | 1-6 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 01 December 1988 (01.12.88) | 06 January 1989 (06.01.899 |
| International Searching Authority | Signature of Authorized Officer |
| ISA/SU | |

Form PCT/ISA/210 (second sheet) (January 1985)